(19) Europäisches Patentamt
European Patent Office
Office européen des brevets

(11) **EP 2 474 874 A1**

(12) **EUROPÄISCHE PATENTANMELDUNG**

(43) Veröffentlichungstag:
**11.07.2012 Patentblatt 2012/28**

(51) Int Cl.:
*G05B 19/042* [(2006.01)]  *G05B 19/05* [(2006.01)]

(21) Anmeldenummer: **11150655.6**

(22) Anmeldetag: **11.01.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder:
• **Krohlas, Günther**
  **76706, Dettenheim (DE)**
• **Lohner, Lena**
  **76187, Karlsruhe (DE)**
• **Pfeiffer, Bernd-Markus**
  **76744, Wörth (DE)**
• **Grieb, Herbert**
  **76316, Malsch (DE)**

(54) **Engineering-System zum Erstellen eines Steuerprogramms mit einem Kalman Filter**

(57) Die Erfindung betrifft ein Engineering-System zum Erstellen eines Steuerprogramms (10), wobei das Steuerprogramm mehrere Software-Funktionsbausteine umfasst, welche aus einer Bibliothek (11) entnommen sind. In der Bibliothek ist ein vorgefertigter Funktionsbaustein (13) mit einem als Kalman-Filter ausgeführten Zustandsschätzer enthalten. Dadurch wird die Verwendung beispielsweise eines erweiterten Kalman-Filters in der Prozessleittechnik erheblich vereinfacht. In einer besonders vorteilhaften Weiterbildung ist der Funktionsbaustein (13) derart ausgebildet, dass zur Verwendung eines applikationsspezifischen Prozessmodells ein Function Call (9) aufrufbar ist, in welchem dieses implementiert ist. Durch einen Anwender ist dann lediglich das applikationsspezifische Prozessmodell zu erstellen und der immer gleich bleibende Teil des Zustandsschätzers ist bereits in dem vorgefertigten Funktionsbaustein (13) enthalten.

FIG 1

EP 2 474 874 A1

**Beschreibung**

Die Erfindung betrifft ein Engineering-System zum Erstellen eines Steuerprogramms gemäß dem Oberbegriff des Anspruchs 1.

Ein derartiges Engineering-System ist aus dem Katalog Siemens ST PCS 7, Februar 2010, Kapitel 3 bekannt. Zur Erstellung eines Steuerprogramms werden in dem Engineering-System mit Hilfe eines grafischen Projektierungswerkzeugs vorgefertigte Funktionsbausteine aus einer Bibliothek ausgewählt, auf der grafischen Arbeitsfläche platziert, grafisch verschaltet und parametriert. Ein fertig gestelltes SIMATIC PCS 7-Projekt wird in einem weiteren Arbeitsschritt übersetzt und in ein Zielsystem, z. B. auf ein Automatisierungsgerät, geladen. Basiselemente für die grafische Projektierung von Automatisierungslösungen sind somit die in Bibliotheken organisierten, vorgefertigten und getesteten Funktionsbausteine. Die Verwendung dieser Bibliothekselemente trägt wesentlich dazu bei, den Engineering-Aufwand und damit die Projektkosten zu minimieren. In das Engineering-System ist insbesondere eine so genannte Advanced Process Library als Bibliothek integriert, in welcher u. a. Funktionsbausteine für höherwertige Regelalgorithmen hinterlegt sind. Ein vorgefertigter Funktionsbaustein mit einem als Kalman-Filter ausgeführten Zustandsschätzer ist jedoch nicht vorhanden.

So genannte Extended Kalman-Filter, die auch als erweiterte Kalman-Filter bezeichnet werden können, sind etablierte Filter zur Bestimmung von nicht messbaren Variablen dynamischer Systeme, die auf rauschbehafteten Messwerten anderer Variablen basieren. Dazu wird ein nichtlineares Modell der Systemdynamik zugrunde gelegt und es werden bestimmte Annahmen über die statistischen Eigenschaften der Störungen getroffen. Kalman-Filter werden beispielsweise in Navigationssystemen routinemäßig eingesetzt. Bisherige Implementierungen von Kalman-Filtern werden nur als spezifische Lösungen für jeweils eine Applikation realisiert und müssen für jede weitere Anwendung von neuem komplett entworfen und implementiert werden. Neben dem großen Aufwand für die Implementierung ist ein weiterer Nachteil die für potentielle Anwender abschreckende Wirkung der Komplexität des Kalman-Filters.

Der Erfindung liegt die Aufgabe zugrunde, ein Engineering-System zu schaffen, das es ermöglicht, dass ein Kalman-Filter durch einen Anwender mit geringerem Aufwand einsetzbar ist.

Zur Lösung dieser Aufgabe weist das neue Engineering-System der eingangs genannten Art die im kennzeichnenden Teil des Anspruchs 1 angegebenen Merkmale auf. In den abhängigen Ansprüchen sind vorteilhafte Weiterbildungen der Erfindung beschrieben.

Die Erfindung hat den Vorteil, dass die Implementierung von Kalman-Filtern in Prozessleitsystemen nun deutlich häufiger und nicht nur in speziellen Einzelfällen erfolgt, da nicht mehr für jede Applikation ein neues Kalman-Filter implementiert und entworfen werden muss. Ein Anwender wird bei der Verwendung des Kalman-Filters nicht mehr durch den Aufwand, der bisher zur Implementierung des Ablaufs der Berechnungen in einem erweiterten Kalman-Filter erforderlich war, belastet. Das Kalman-Filter ist somit ohne Kenntnisse der Theorie implementierbar, da lediglich das Prozesswissen bei der Auswahl eines geeigneten Prozessmodells oder der Implementierung eines applikationsspezifischen Prozessmodells eingebracht werden muss. Damit ist die abschreckende Wirkung der Komplexität des Kalman-Filters umgangen.

Der neue Funktionsbaustein mit einem als Kalman-Filter ausgeführten Zustandsschätzer kann insbesondere für Batch-Reaktoren eingesetzt werden, die in der chemischen Industrie weite Verbreitung finden. Die Reaktoren werden beispielsweise zur Herstellung von Feinchemikalien, Pigmenten, Polymeren oder Arzneimitteln verwendet. Die nichtlineare Prozessdynamik stellt eine hohe Anforderung an die Regelung und Steuerung von Batch-Reaktoren. Im Gegensatz zu kontinuierlichen Prozessen ergeben sich bei Batch-Prozessen gar keine oder nur zeitlich begrenzte stationäre Zustände, so dass eine Linearisierung des Prozessmodells um einen Arbeitspunkt nicht möglich ist. Der Zustandsschätzer ermöglicht es nun, nicht zugängliche oder nur mit einem sehr großen messtechnischen Aufwand zu bestimmende physikalische Größen eines Reaktors aus leicht zugänglichen Messgrößen, wie z. B. Temperaturen und Massenströmen, zu ermitteln. Der Funktionsbaustein arbeitet bei seiner Verwendung in einem Steuerprogramm als Zustandsschätzer, in welchem der Filter-Algorithmus beispielsweise des erweiterten Kalman-Filters implementiert ist. Ebenso kann der Zustandsschätzer als lineares Kalman-Filter ausgeführt sein, der lediglich Zustände und keine Parameter schätzen kann. Im Falle des erweiterten Kalman-Filters dient dieser zur Zustandsschätzung nichtlinearer dynamischer Systeme bei regelungstechnischen Anwendungen. Zudem entfernt das Kalman-Filter Störungen, die von den Messgeräten bei der Erfassung der Messgrößen und vom zu regelnden Prozess verursacht werden.

Da für das Kalman-Filter ein Prozessmodell benötigt wird, ist der Aufwand einer applikationsspezifischen Anpassung des Funktionsbausteins besonders gering, wenn in dem Funktionsbaustein mit dem Zustandsschätzer mehrere Prozessmodelle implementiert sind, aus welchen durch einen vorgegebenen oder vorgebbaren Parameter ein Modell für die jeweilige Applikation auswählbar ist.

In einer besonders vorteilhaften Weiterbildung der Erfindung ist der Funktionsbaustein derart ausgebildet, dass zur Verwendung eines applikationsspezifischen Prozessmodells ein Function Call aufrufbar ist, in welchem ein applikationsspezifisches Prozessmodell implementiert ist. Dadurch wird die Eigenschaft bisheriger Implementierungen von Kalman-Filtern, dass der applikationsspezifische Teil der Implementierung eng mit dem algorithmischen Teil des Filters vermascht war, aufgehoben, so dass der applikationsspezifische Teil vollkommen vom universellen Teil des Kalman-Filters getrennt ist, wobei zwischen beiden Teilen eine klar definierte Schnittstelle existiert. Diese Struktur ist insbesondere für eine Implementierung in einem Engineering-System vorteilhaft. Der universelle, d. h. immer gleich bleibende Teil des Algorithmus zur Implementierung des Kalman-Filters, durch welchen z. B. die Abfolge der mathematischen Operationen festgelegt wird, ist dabei in dem Funktionsbaustein in der Bibliothek des Engineering-Systems implementiert und fertig übersetzt, so dass er für einen Anwender nicht mehr modifizierbar und auch nicht einsehbar ist. Als Funktionsbaustein wird ein Softwaremodul mit definierter Schnittstelle und einem eigenen Speicherbereich für statische Lokaldaten bezeichnet.

Die anwendungsspezifischen Komponenten der Implementierung des Kalman-Filters, die Prozessmodelle und deren Jacobi-Matrizen, sind in einem Function Call hinterlegt, der durch den Funktionsbaustein während des Ablaufs aufgerufen wird. Diese Komponenten können von einem Anwender oder einem Zulieferer selbst editiert werden, wobei die Jacobi-Matrizen, welche das Prozesswissen repräsentieren, vor unberechtigter Kenntnisnahme geschützt oder auch offengelegt werden können. Als Function Call wird ein Softwaremodul bezeichnet, das eine definierte Schnittstelle aber keinen eigenen Speicherbereich für statische Lokaldaten aufweist.

Der Funktionsbaustein bleibt bei der Erstellung eines Steuerprogramms unverändert und muss nicht neu übersetzt werden, obwohl er den Function Call als Unterfunktion enthält. Dies wird dadurch erreicht, dass die Schnittstelle zwischen dem Funktionsbaustein und dem Function Call universell definiert ist und unverändert bleibt. Zum Zeitpunkt der Übersetzung des Funktionsbausteins steht der Function Call als "leere Hülle" zur Verfügung, d. h. mit definierter Schnittstelle, aber noch ohne applikationsspezifischen Inhalt. Eine vollständige Neuimplementierung des Kalman-Filters ist für verschiedene Anwendungen somit nicht mehr nötig, so dass der damit verbundene Aufwand für den Anwender deutlich reduziert ist. Das applikationsspezifische Wissen liegt gebündelt an einer Stelle und kann daher leicht durch einen Anwender erstellt werden. Der universelle Teil des Funktionsbausteins kann fertig übersetzt ausgeliefert werden, so dass das darin enthaltene Know-how des Herstellers vor unberechtigtem Zugriff geschützt ist. Auch der Anwender oder Zulieferer kann sein Wissen über das Prozessmodell und dessen Übertragung in den Function Call bei Bedarf gegenüber Dritten schützen.

Falls innerhalb der Anlage, die mit einem Prozessleitsystem automatisiert ist, mehrere verschiedene Teilanlagen verschiedene Zustandsschätzer mit verschiedenen Prozessmodellen benötigen, werden diese Zustandsschätzer als individuelle Instanzen des universellen Funktionsbausteins angelegt. Im unterlagerten Function Call werden mehrere verschiedene Prozessmodelle implementiert. Die Auswahl des jeweils passenden Modells erfolgt über einen Parametereingang an jeder Instanz des Funktionsbausteins.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1 einen Prozess mit einer Regeleinrichtung und einem Engineering-System und

Figur 2 ein Ablaufdiagramm zur Verdeutlichung der Arbeitsweise eines Kalman-Filters.

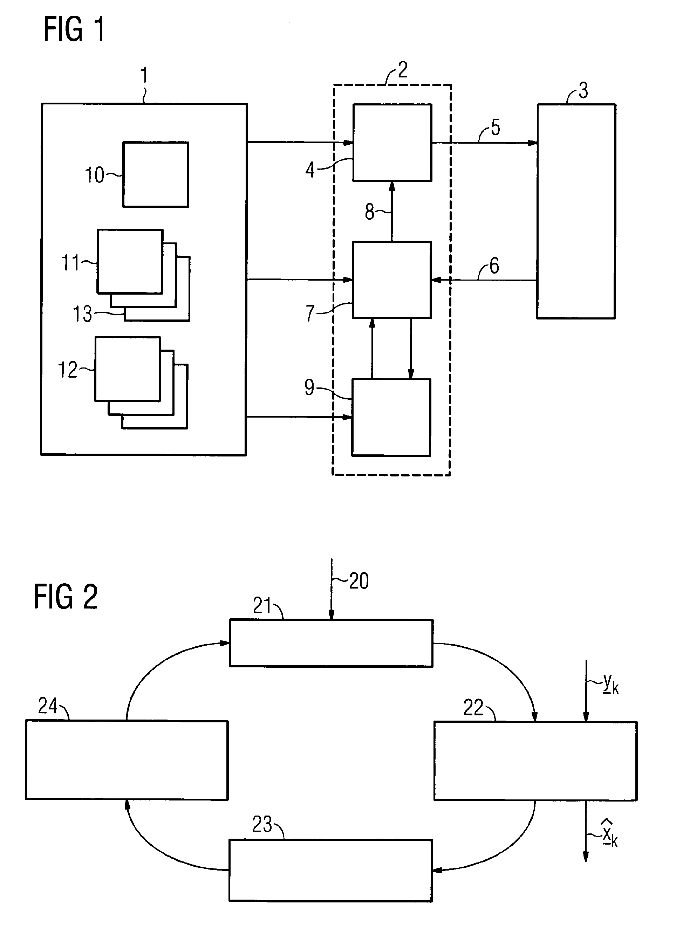

In Figur 1 ist ein Engineering-System 1 zusammen mit einer Regeleinrichtung 2 und einem zu regelnden verfahrenstechnischen Prozess 3 dargestellt. Der Prozess 3 ist mit Stellgliedern und Messumformern ausgestattet. Im Betrieb gibt ein Regler 4 der Regeleinrichtung 2 Stellgrößen 5 an den Prozess 3 aus. Leicht zugängliche Messgrößen 6, die mit Hilfe von Messumformern am Prozess 3 erfasst werden, verarbeitet ein Funktionsbaustein 7, der daraus messtechnisch schwer zugängliche physikalische Größen 8 bestimmt und diese als Istgrößen an den Regler 4 zur Durchführung der Regelung weitergibt. Der Funktionsbaustein 7 hat somit die Funktion eines als Kalman-Filter ausgeführten Zustandsschätzers, wobei das applikationsspezifische Prozessmodell durch einen Function Call 9 implementiert ist, der durch den Funktionsbaustein 7 aufgerufen wird. Die Regeleinrichtung 2 kann beispielsweise durch ein Automatisierungsgerät realisiert sein, auf welches ein Steuerprogramm 10, das u. a. den Regler 4, den Funktionsbaustein 7 und den Function Call 9 umfasst, geladen ist. Das Engineering-System 1 ermöglicht eine komfortable Erstellung des Steuerprogramms 10 durch Bereitstellen vorgefertigter Funktionsbausteine aus einer Funktionsbaustein-Bibliothek 11 und vorgefertigter Function Calls aus einer Function Call-Bibliothek 12. Selbstverständlich können zudem Funktionsbausteine oder Function Calls, die nicht in einer Bibliothek vorhanden sind, individuell durch einen Anwender erstellt werden. Die Funktionsbaustein-Bibliothek 11 enthält einen als Kalman-Filter ausgeführten Zustandsschätzer als vorgefertigten Funktionsbaustein 13, der zur Erstellung des Steuerprogramms 10, in welchem der Zustandsschätzer eingesetzt wird, genutzt wurde.

Der Funktionsbaustein 13 aus der Bibliothek 11 dient zur Realisierung eines Zustandsschätzers, in dem der Filter-Algorithmus des erweiterten Kalman-Filters implementiert ist. Das Kalman-Filter ist ein mathematisches Modell zur Auswertung von Messdaten für die Regelungstechnik. Der Algorithmus dient der Zustandsschätzung nichtlinearer dynamischer Systeme. Dabei entfernt das Kalman-Filter die von den Messgeräten und dem Prozess verursachten Störungen. Als Basis dient ein mathematisches Modell des dynamischen Prozesses und der Messverfälschungen, bei welchen es sich um stochastische Störungen handeln kann. Das Kalman-Filter bietet somit eine Lösung des allgemeinen Problems, einen Zustand eines zeitdiskreten Prozesses zu schätzen, der durch lineare stochastische Differenzengleichungen beschrieben wird. Das Schätzproblem wird auf nichtlineare Prozesse erweitert, welche durch ein nichtlineares Zustandsraummodell beschrieben werden.

Anhand Figur 2 wird im Folgenden der Ablauf der Berechnungen in einem erweiterten Kalman-Filter allgemein beschrieben. Für den Kalman-Algorithmus muss dem Funktionsbaustein a-priori-Wissen 20 über den zu beobachtenden Prozess vorgegeben werden. Dazu gehören die Kovarianz des Prozessrauschens $Q_k$, die Kovarianz des Messrauschens $\underline{R}_k$, Initialwerte des Zustandsschätzwerts $\hat{\underline{x}}_{\overline{0}}$ sowie der Schätzfehler-Kovarianz $\underline{P}_{\overline{0}}$. Die Schrittfolge des erweiterten Kalman-Filters entspricht der des linearen Kalman-Filters. Es sind lediglich zwei zusätzliche Zwischenschritte zur Berechnung der Jacobi-Matrizen $\underline{H}_k$ und $\underline{\Phi}_k$ zu berücksichtigen nach den Formeln:

$$\underline{H}_k = \left( \frac{\partial h_i}{\partial x_j}\left( \hat{\underline{x}}_k^- \right) \right)_{i,j}$$

$$\underline{\Phi}_k = \left( \frac{\partial f_i}{\partial x_j}\left( \hat{\underline{x}}_k^+, \underline{u}_k \right) \right)_{i,j} .$$

Die Berechnungen der beiden Jacobi-Matrizen erfolgen in einem Function Call. Die in Figur 2 dargestellte, immer gleich bleibende Abfolge der mathematischen Operationen ist im Funktionsbaustein 13 (Figur 1) implementiert und fertig übersetzt, so dass diese für den Anwender des Funktionsbausteins nicht mehr modifizierbar und auch nicht einsehbar ist. In einem Schritt 21 der Abfolge wird die Kalman-Verstärkung berechnet nach der Formel:

$$\underline{K}_k = \underline{P}_k^- \cdot \underline{H}_k^T \cdot \left( \underline{H}_k \cdot \underline{P}_k^- \cdot \underline{H}_k^T + \underline{R}_k \right)^{-1} .$$

In einem Schritt 22 werden Zustandsschätzwerte $\hat{\underline{x}}_k^+$ unter Verwendung neuer Messwerte $\underline{y}_k$ aktualisiert gemäß der Formel:

$$\hat{\underline{x}}_k^+ = \hat{\underline{x}}_k^- + \underline{K}_k \left( \underline{y}_k - \underline{h}(\hat{\underline{x}}_k^-) \right) .$$

Gemäß der Formel

$$\underline{P}_k^+ = \underline{P}_k^- - \underline{K}_k \cdot \underline{H}_k \cdot \underline{P}_k^-$$

erfolgt in einem Schritt 23 die Berechnung der Kovarianz $\underline{P}_k$ des neuen Zustandsschätzwerts. Entsprechend den Formeln

$$\hat{\underline{x}}_{k+1}^- = \underline{f}(\hat{\underline{x}}_k^+, \underline{u}_k)$$

$$\underline{P}_{k+1}^- = \underline{\Phi}_k \cdot \underline{P}_k^+ \cdot \underline{\Phi}_k^T + \underline{Q}_k$$

werden in einem Schritt 24 eine Prädiktion $\hat{\underline{x}}_{\overline{k}+1}$ und eine Kovarianz $\underline{P}_{\overline{k}+1}$ der Prädiktion berechnet. In jedem einzelnen Schritt 21 ... 24 werden dabei die Modellgleichungen des zugrunde liegenden Prozesses benötigt. Die in den Gleichungen verwendeten Formelzeichen sind:

$\underline{x}_k$ - Vektor der Zustandsgrößen zum Zeitpunkt $t_k$,
$\underline{u}_k$ - Vektor der Eingangsgrößen zum Zeitpunkt $t_k$,
$\underline{y}_k$ - Vektor der Ausgangsgrößen zum Zeitpunkt $t_k$,
$\underline{\Phi}_k$ - Dynamikmatrix (Jacobi-Matrix),
$\underline{H}_k$ - Ausgangsmatrix (Jacobi-Matrix),
$\underline{P}_k^-$ - Schätzfehler-Kovarianz zum Zeitpunkt $t_k$,
$\underline{K}_k^-$ - Kalman-Verstärkung zum Zeitpunkt $t_k$,
$\underline{Q}_k^-$ - Kovarianz des Prozessrauschens zum Zeitpunkt $t_k$,
$\underline{R}_k$ - Kovarianz des Messrauschens zum Zeitpunkt $t_k$.

Bei der Projektierung des Zustandsschätzers sind durch einen Anwender in vorteilhafter Weise lediglich noch die folgenden Schritte vorzunehmen:

- Festlegen der Anzahl der Zustandsgrößen x, Eingangsgrößen u und Ausgangsgrößen y,
- Verschaltung der Eingangsgrößen u und der Ausgangsgrößen y,
- Vorgabe von Start-, Einheits- und Grenzwerten für die Zustandsgrößen x,
- Ermitteln der Diagonalelemente der Kovarianz-Matrix des Prozessrauschens und der Kovarianz-Matrix des Messrauschens und,
- falls eines von verschiedenen vorgefertigten Prozessmodellen genutzt werden kann, Auswählen des jeweiligen Prozessmodells durch Festlegen eines Prozessmodell-Identifikators.

Der Function Call 9 in Figur 1 beinhaltet Berechnungsalgorithmen des anwendungsspezifischen Prozessmodells, die für das erweiterte Kalman-Filter erforderlich sind und beispielsweise durch den Anwender erstellt werden können. Im Function Call 9 können alternativ oder zusätzlich bereits für verschiedene Prozesse vorgefertigte Prozessmodelle vorgehalten werden, von welchen beispielsweise durch einen einstellbaren Prozessmodell-Identifikator das jeweils geeignete durch den Anwender auswählbar ist. Die Modelle umfassen die nichtlinearen Funktionen $h_i$ der Ausgangsmatrix $\underline{H}_k$, die mit den jeweils aktuellen Schätzwerten aufgerufen werden, sowie die nichtlinearen Funktionen $f_i$ der Dynamikmatrix $\underline{\Phi}_k$, welche mit den jeweils aktuellen Schätz- und Eingangswerten aufgerufen werden. Da weitere Einzelheiten der Algorithmen zur Implementierung des erweiterten Kalman-Filters bereits aus der Diplomarbeit "Entwurf eines kalorimetrischen Zustandsschätzers für Batch-Reaktoren und Implementierung in das Prozessleitsystem Siemens Simatic PCS 7", Zahn, S., 2004, Betreuer B.-M. Pfeiffer, Siemens Karlsruhe, Prof. M. Pandit, Universität Kaiserslautern bekannt sind, kann diesbezüglich auf eine weitergehende Beschreibung verzichtet werden.

Das universelle Kalman-Filter wurde am Beispiel eines Polymerisationsreaktors als exemplarischer Anwendungsfall in der Prozessindustrie per Simulation getestet. Aufgrund seiner einfachen Anwendbarkeit erlaubt das unter Verwendung eines vorgefertigten Funktionsbausteins implementierte erweiterte Kalman-Filter es in besonders einfacher Weise, aus dem "undurchsichtigen" Stahlreaktor mit doppeltem Mantel einen "gläsernen" Reaktor zu erhalten, der dem Anlagenfahrer einen Blick in seine inneren Zustände ermöglicht. Diese zusätzlichen Informationen können je nach Anwendungsfall zu folgenden Zwecken genutzt werden:

- Abschätzung der aktuellen Reaktionsgeschwindigkeit und damit des erreichten Reaktionsfortschritts, um zum richtigen Zeitpunkt die nächste Phase der Rezeptsteuerung zu starten, wenn eine optimale Ausbeute erreicht ist,
- Störgrößenaufschaltung auf den Temperaturregler zur Verbesserung der Regelgüte, basierend auf der Kenntnis der Reaktionsexothermie,
- Überwachung des Reaktors, um gefährliche Zustände frühzeitig zu erkennen, bei denen die Reaktion zu schnell erfolgt und eine Explosion des Reaktors droht, und/oder
- Planung von Reinigungsmaßnahmen auf Basis des geschätzten Wärmeübergangs vom Reaktor-Inneren zum Kühlmantel, da beispielsweise ein Polymer Beläge an der Reaktorwand bildet, die den Wärmeübergang hemmen können.

Durch die einfache Anwendbarkeit des Kalman-Filters, die zu seiner weiteren Verbreitung führt, können somit in vorteilhafter Weise deutliche Verbesserungen der Prozessführung erzielt werden.

**Patentansprüche**

1. Engineering-System zum Erstellen eines Steuerprogramms (10), wobei das Steuerprogramm mehrere Software-Funktionsbausteine umfasst, welche aus einer Bibliothek (11) entnommen sind, **dadurch gekennzeichnet, dass** in der Bibliothek ein vorgefertigter Funktionsbaustein (13) mit einem als Kalman-Filter ausgeführten Zustandsschätzer enthalten ist.

2. Engineering-System nach Anspruch 1, **dadurch gekennzeichnet, dass** in dem Funktionsbaustein (13) mit dem Zustandsschätzer mehrere Prozessmodelle implementiert sind, aus welchen durch einen vorgegebenen oder vorgebbaren Parameter ein Modell für die jeweilige Applikation auswählbar ist.

3. Engineering-System nach Anspruch 1 oder 2, **dadurch gekennzeichnet, dass** der Funktionsbaustein (13) derart ausgebildet ist, dass zur Verwendung eines applikationsspezifischen Prozessmodells ein Function Call (9) aufrufbar ist, in welchem das applikationsspezifische Prozessmodell implementiert ist.

4. Engineering-System nach einem der vorhergehenden Ansprüche, **dadurch gekennzeichnet, dass** von dem Funktionsbaustein (13) mit dem Zustandsschätzer mehrere Instanzen in einem Projekt anlegbar sind, durch welche unterschiedliche Prozessmodelle in einem Function Call (9) aufrufbar sind, aus welchen durch einen vorgegebenen oder vorgebbaren Parameter des Funktionsbausteins (13) ein Modell für die jeweilige Applikation auswählbar ist.

FIG 1

FIG 2

Europäisches Patentamt
European Patent Office
Office européen des brevets

# EUROPÄISCHER RECHERCHENBERICHT

Nummer der Anmeldung

EP 11 15 0655

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2010/037145 A2 (FISHER ROSEMOUNT SYSTEMS INC [US]; JONES BRYAN MICHAEL [US]; BELLVILLE) 1. April 2010 (2010-04-01) * Absatz [0009] - Absatz [0032] * * Absatz [0055] - Absatz [0080] * * Absatz [0101] - Absatz [0122] * * Abbildungen 2-3 * ----- | 1-4 | INV. G05B19/042 G05B19/05 |
| X | EP 1 422 619 A2 (ROCKWELL SOFTWARE INC [US]) 26. Mai 2004 (2004-05-26) * Absatz [0012] - Absatz [0032] * ----- | 1-4 | |
| X | WO 2008/037649 A1 (SIEMENS AG [DE]; PFEIFFER BERND-MARKUS [DE]; BRAEMIG MICHAEL [DE]) 3. April 2008 (2008-04-03) | 1 | |
| Y | * das ganze Dokument * ----- | 2-4 | |
| Y | US 2005/149212 A1 (GEISSDORFER KLAUS [DE] ET AL GEISSDOERFER KLAUS [DE] ET AL) 7. Juli 2005 (2005-07-07) * das ganze Dokument * ----- | 2-4 | RECHERCHIERTE SACHGEBIETE (IPC) G05B |
| Y | US 6 272 388 B1 (BUVEL RAYMOND L [US] ET AL) 7. August 2001 (2001-08-07) * Spalte 2, Zeile 37 - Spalte 3, Zeile 63 * ----- | 3,4 | |

Der vorliegende Recherchenbericht wurde für alle Patentansprüche erstellt

| Recherchenort | Abschlußdatum der Recherche | Prüfer |
|---|---|---|
| Den Haag | 17. Juni 2011 | Patsiopoulos, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 15 0655

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2011

| Im Recherchenbericht angeführtes Patentdokument | | Datum der Veröffentlichung | Mitglied(er) der Patentfamilie | | Datum der Veröffentlichung |
|---|---|---|---|---|---|
| WO 2010037145 | A2 | 01-04-2010 | GB<br>WO | 2476011 A<br>2010037146 A2 | 08-06-2011<br>01-04-2010 |
| EP 1422619 | A2 | 26-05-2004 | KEINE | | |
| WO 2008037649 | A1 | 03-04-2008 | KEINE | | |
| US 2005149212 | A1 | 07-07-2005 | KEINE | | |
| US 6272388 | B1 | 07-08-2001 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Ein derartiges Engineering-System ist aus dem Katalog Siemens ST PCS. 07. Februar 2010